# EUROPÄISCHE PATENTSCHRIFT

(11) **EP 3 930 981 B1**
(45) Veröffentlichungstag und Bekanntmachung des Hinweises auf die Patenterteilung: **28.08.2024**
(21) Anmeldenummer: 20706147.4
(22) Anmeldetag: 12.02.2020
(51) Int. Cl.: B29C 48/02, B29C 64/329, B29C 31/06, B29C 48/25, B29C 48/285, B29B 7/58, B29C 48/05, B29B 7/38, B29B 7/88, B29B 7/60, B29B 7/72

(54) **BEFÜLLEINRICHTUNG UND VERFAHREN ZUR ZUFÜHRUNG VON VERARBEITUNGSMATERIAL AN EINE EXTRUDERSCHNECKE**
CHARGING SYSTEM AND METHOD FOR FEEDING PROCESSING MATERIAL TO AN EXTRUDER SCREW
DISPOSITIF DE REMPLISSAGE ET PROCÉDÉ D'ALIMENTATION D'UN MATÉRIAU À TRAITER VERS UNE VIS D'EXTRUSION

(30) Priorität: 28.02.2019 DE 102019202699; 06.11.2019 DE 102019217113
(43) Veröffentlichungstag der Anmeldung: 05.01.2022
(73) Patentinhaber: AIM3D GmbH, 18069 Rostock (DE)
(72) Erfinder: MORRISON, Vincent, 18292 Krakow am See (DE); LIEBERWIRTH, Clemens, 18059 Rostock (DE); ZIELKE, René, 18069 Rostock (DE); RADON, Robert, 18055 Rostock (DE); WEIDNER, Tim, 18057 Rostock (DE)
(74) Vertreter: Maikowski & Ninnemann Patentanwälte Partnerschaft mbB
(86) Internationale Anmeldenummer: PCT/EP2020/053580
(87) Internationale Veröffentlichungsnummer: WO 2020/173704

(56) Entgegenhaltungen:
- WO-A1-2011/014902
- WO-A2-2011/092269
- CN-A- 1 586 865
- CN-U- 202 079 769
- CN-U- 204 398 286
- DE-A1- 102017 114 841

## Beschreibung

Die vorgeschlagene Lösung betrifft insbesondere eine Befülleinrichtung für die Zuführung von Verarbeitungsmaterial an eine Extruderschnecke, insbesondere eine Extruderschnecke für die additive Fertigung mit Metall-, Keramik- und/oder Kunststoffspritzgussgranulaten.

Schneckenextruder finden vor allem im Bereich der Serienfertigung von Bauteilen mittels Spritzguss und Druckguss Anwendung. Dabei befinden sich Extruderschnecke, Einspritzdüse und Matrize meist in einer waagerechten Linie zueinander. Die Befüllung mit Material, das hauptsächlich als Granulat oder Pulver vorliegt, erfolgt dabei in der Regel im hintersten Teil des Schneckenextruders, in der sogenannten Einzugszone. Das Material wird über einen Trichter, der auf einem Rohrschnitt des Extruders aufsitzt, direkt vertikal auf die Extruderschnecke geführt. Durch einen ausreichend großen Querschnitt im Trichter, der eine Brückenbildung verhindert, fällt das Material schwerkraftgetrieben auf die Schnecke und wird von ihr eingezogen. Im Bereich der Serienfertigung werden in der Regel sogenannte Drei-Zonen-Schneckenextruder eingesetzt, welche das Material einziehen und zur Düse fördern. Das Material wird komprimiert, entlüftet und homogenisiert. Danach wird ein Druck zur Füllung der Matrize aufgebaut.

Die Einzugszone des Schneckenextruders ist häufig als Rohrschnitt in einem Gehäuse des Schneckenextruders ausgeführt. Auf diesem Rohrschnitt ist ein Trichter angeordnet über den das Material der Schnecke zugeführt werden kann. Rohrschnitt und Trichter sind von ihrem minimalen Querschnitt dabei so zu wählen, dass sich keine Brückenbildung des als Granulat vorliegenden Materials ergeben kann. Dies hängt dabei stark von Schüttwinkel und Reibungskoeffizient des verwendeten Schüttgutes ab.

In der DE 10 2014 018 081 A1 ist eine 3D-Druckervorrichtung zur additiven Fertigung metallischer Bauteile beschrieben. Hierbei kommt ebenfalls ein Schneckenextruder zum Einsatz, der als Granulat vorliegendes Verarbeitungsmaterial verarbeitet. In einem verfahrbaren Druckkopf der 3D-Druckvorrichtung wird mittels eines senkrecht angeordneten Schneckenextruders das thermoplastisch verformbare Verarbeitungsmaterial schichtweise extrudiert, um ein dreidimensionales Bauteil zu erzeugen. Nähere Angaben zur Förderung des Verarbeitungsmaterials an die Extruderschnecke enthält die DE 10 2014 018 081 A1 nicht.

Die Druckschriften WO 2011/092269 A2, CN 1 586 865 A und DE 10 2017 114841 A1 offenbaren weitere 3D-Druckervorrichtungen.

Der Einsatz von Schneckenextrudern für die additive Fertigung ist vor allem durch ihr Gewicht und ihre Baugröße limitiert, die typischerweise stark von der Länge der Extruderschnecke abhängen, da die Schneckenextruder entweder verfahrbar ausgeführt sein müssen oder das gesamte Baufeld bewegt wird. Letztere Variante macht es allerdings erforderlich, die gesamte 3D-Druckvorrichtung deutlich überzudimensionieren.

Der vorgeschlagene Lösung liegt vor diesem Hintergrund die Aufgabe zugrunde, die Zuführung von Verarbeitungsmaterial, insbesondere granulatförmigem Verarbeitungsmaterial an eine Extruderschnecke weiter zu verbessern, um insbesondere bei additiven Fertigungsprozessen die bisher aus dem Stand der Technik bekannten Nachteile zu überwinden oder zumindest zu reduzieren.

Diese Aufgabe ist sowohl mit einer Befülleinrichtung des Anspruchs 1 als auch mit einem Verfahren des Anspruchs 12 gelöst.

Eine vorgeschlagene Befülleinrichtung für die Zuführung von Verarbeitungsmaterial an mindestens eine Extruderschnecke, insbesondere eine vertikal erstreckte Extruderschnecke, umfasst hierbei
- einen Trichter, der eingerichtet ist, das Verarbeitungsmaterial entlang einer Zuführungsrichtung an die Extruderschnecke zu leiten,
- ein Materialreservoir für die schwerkraftgetriebene Zuführung des Verarbeitungsmaterials zu dem Trichter und
- eine zu Zuführeinrichtung, über die unter Wirkung der Extruderschnecke entgegen der Zuführungsrichtung an dem Trichter zurückgeführtes respektive zurückgedrängtes Verarbeitungsmaterial wieder zusammen mit aus dem Materialreservoir zugeführtem Verarbeitungsmaterial in Richtung der Extruderschnecke förderbar ist.

Die vorgeschlagene Befülleinrichtung ermöglicht somit, über eine Zuführeinrichtung unter Wirkung mindestens einer sich drehenden Extruderschnecke eventuell aus dem Trichter zurückgeführtes Verarbeitungsmaterial aktiv wieder zusammen mit aus dem Materialreservoir stammenden Verarbeitungsmaterial in Richtung der mindestens einen Extruderschnecke (und damit gegebenenfalls auch mehreren Extruderschnecken) und damit über den Trichter zu der mindestens einen Extruderschnecke zu fördern. Hierüber ist dann beispielsweise eine Vermengung (a) des an dem Trichter unter Wirkung der sich drehenden Extruderschnecke zurückgeführten Verarbeitungsmaterials mit (b) dem aus dem Materialreservoir zugeführtem Verarbeitungsmaterial möglich. Die beispielsweise mechanisch, elektrisch, pneumatisch und/oder magnetisch wirkende Zuführeinrichtung ist somit für eine entsprechende Vermengung eingerichtet und vorgesehen.

Auf Basis der vorgeschlagenen Lösung kann somit die Extruderschnecke und damit die hiermit ausgestattete Extrudervorrichtung, z.B. in Form eines (Schnecken-)Extruders, mit zurücklaufendem Verarbeitungsmaterial befüllt werden. Eine hierbei realisierbare Vermengung von zurückgeführtem und gegebenenfalls bereits zumindest teilweise zerkleinertem Verarbeitungsmaterial mit dem aus dem Materialreservoir stammenden "rohen" Verarbeitungsmaterial führt zu einer Verdichtung des der Extruderschnecke zugeführten Verarbeitungsmaterials. Dies ermöglicht wiederum eine kompaktere Ausgestaltung der Extruderschnecke, die bisher insbesondere bei Hochgeschwindigkeitsextrusionsanwendungen nicht erreicht werden konnte, ohne die Qualität des herzustellenden Bauteils signifikant negativ zu beeinflussen.

Es ist vorgesehen, dass die Befülleinrichtung für die Zuführung von granulatförmigem Verarbeitungsmaterial an eine vertikal erstreckte Extruderschnecke eingerichtet und vorgesehen ist. Im bestimmungsgemäß montierten Zustand der Befülleinrichtung wird hierüber folglich Verarbeitungsmaterial an eine vertikal erstreckte Extruderschnecke zugeführt.

Der Trichter weist ein Zerkleinerungswerkzeug auf, über das zumindest ein Teil der in den Trichter gelangende granulatförmigen Verarbeitungsmaterials bei sich drehender Extruderschnecke zerkleinert wird. Das Zerkleinerungswerkzeug kann hierbei verhindern, dass sich das Verarbeitungsmaterial unter Wirkung der Extruderschnecke lediglich mitdreht, ohne weiter entlang der Längsachse der Extruderschnecke gefördert zu werden. Unter Wirkung der sich drehenden Extruderschnecke wird stattdessen zumindest ein Teil des gegebenenfalls groben Verarbeitungsmaterials an dem Zerkleinerungswerkzeug zerkleinert, wodurch die Schüttdichte im Bereich der Extruderschnecke erhöht wird. Im Bereich einer Plastifizierungs- und Homogenisierungszone der Extruderschnecke respektive der hiermit ausgestatteten Extrudervorrichtung muss somit damit weniger Luft aus dem Verarbeitungsmaterial gedrückt werden. In diesem Zusammenhang kann auch vorgesehen sein, dass das Zerkleinerungswerkzeug innerhalb eines Einfüllbereichs des Trichters mindestens eine Zerkleinerungskante für die Zerkleinerung des granulatförmigen Verarbeitungsmaterials unter Wirkung der sich drehenden Extruderschnecke ausbildet. Granulat des Verarbeitungsmaterials wird dabei unter Wirkung der sich drehenden Extruderschnecke gegen die mindestens eine Zerkleinerungskante gepresst und hierdurch zerkleinert, insbesondere zertrümmert.

Die mindestens eine Zerkleinerungskante kann hierbei beispielsweise an einem konusförmigen Reduzierkörper des Zerkleinerungswerkzeugs, einer sich entlang der Trichterlängsachse erstreckenden Wandung des Zerkleinerungswerkzeugs oder einer sich zumindest abschnittsweise spiralförmig um die Trichterlängsachse erstreckenden Wandung des Zerkleinerungswerkzeugs vorgesehen sein. Insbesondere kann das Zerkleinerungswerkzeug vertikal verlaufende Rippen oder Klingen innerhalb des Trichters umfassen, die eine oder mehrere Zerkleinerungskanten für die Zerkleinerung des Verarbeitungsmaterials ausbilden.

Mithilfe des Zerkleinerungswerkzeugs kann im Betrieb der Extruderschnecke zerkleinertes Verarbeitungsmaterial, insbesondere pulverförmiges Verarbeitungsmaterial entgegen der Zuführrichtung an dem Trichter zurückgeführt, insbesondere zurückgedrängt werden, sodass an einem Einfüllbereich des Trichters sich rückstauendes (zerkleinertes) Verarbeitungsmaterial verbleibt. Beispielsweise drückt sich dann pulverförmiges Verarbeitungsmaterial in Form von zertrümmertem oder zerstoßenem Granulat an einer Trichterinnenwand nach oben und bildet eine den Zulauf von aus Materialreservoir stammenden Verarbeitungsmaterial blockierende Wandung. Es kann sich somit eine störende Brücke im Einfüllbereich des Trichters ausbilden. Über die Zuführeinrichtung kann in einer derartigen Ausführungsvariante ein derartig zurückgeführtes, zerkleinertes Verarbeitungsmaterial zusammen mit dem aus dem Materialreservoir zugeführten, und zerkleinerten granulatförmigen Verarbeitungsmaterial gezielt zu der Extruderschnecke gefördert werden.

Beispielsweise weist die Zuführeinrichtung zur mechanischen Förderung des Verarbeitungsmaterials in Richtung der Extruderschnecke einen längsverschieblichen Schieber auf. Alternativ oder ergänzend kann die Zuführeinrichtung zur Förderung des Verarbeitungsmaterials in Richtung der Extruderschnecke mindestens eine Druckluftdüse und/oder mindestens eine Magnetspule aufweisen. Die Verwendung einer Magnetspule kann hierbei insbesondere im Zusammenhang mit metallischem, granulatförmigem Verarbeitungsmaterial vorteilhaft sein.

Bei Verwendung eines längsverschieblichen Schiebers als Teil der Zuführeinrichtung kann vorgesehen sein, dass der Schieber einen L-förmigen Querschnitt aufweist. Eine derartige Querschnittsform des Schiebers hat sich insbesondere im Zusammenhang mit verschiedenen Verarbeitungsmaterialien, wie zum Beispiel Metallspritzgussgranulaten, insbesondere wachsgefüllten Metallspritzgussgranulaten, fasergefüllten Granulaten und ungefüllten Granulaten als vorteilhaft erwiesen.

Alternativ oder ergänzend sieht eine Ausführungsvariante vor, dass ein längsverschieblicher Schieber der Zuführeinrichtung einen Rammabschnitt zur Förderung des Verarbeitungsmaterials in Richtung der Extruderschnecke aufweist, die an einer der Extruderschnecke zugewandten Stirnseite eine Einbuchtung aufweist. Die an der Stirnseite vorgesehene, zum Beispiel konkave, Einbuchtung korrespondiert hierbei dann beispielsweise mit einer Außenkontur der Extruderschnecke. In einer Ausführungsvariante ist die Ausbuchtung hierbei derart bemessen, dass bei maximal in Richtung der Extruderschnecke längsverschobenem Schieber zumindest ein Teil eines äußeren Randes der Extruderschnecke innerhalb der Einbuchtung des Rammabschnitts vorliegt. Über die Einbuchtung ist somit eine möglichst große Annäherung des Schiebers an die Extruderschnecke möglich, ohne dass der längsverschobene Schieber die Drehbarkeit der Extruderschnecke beeinträchtigt. Der Schieber kann somit in einem längsverschobenen, d.h. ausgefahrenem, Zustand bis an die Extruderschnecke herangerückt sein. Gleichzeitig verbleibt aber noch ein schmaler Spalt zwischen dem Rammabschnitt des Schiebers und der Extruderschnecke, um die Drehung der Extruderschnecke nicht zu behindern.

In einer Ausführungsvariante weist der Schieber zwei sich jeweils quer zu einer Verstellrichtung, entlang der der Schieber längsverschieblich ist, erstreckende und zwischen sich einen Zwischenraum definierende Seitenwände auf. Über die dementsprechend einander gegenüberliegenden Seitenwände kann derart beispielsweise ein taschenförmiger Zwischenraum an dem Schieber ausgebildet sein. Hierbei weist der Schieber dann beispielsweise im Bereich des Zwischenraums einen L-förmigen Querschnitt auf und ist an seinen Längsseiten durch die Seitenwände berandet. Durch die Verwendung der sich quer zu einer Verstellrichtung erstreckenden Seitenwänden und einem dazwischenliegenden, in Verstellrichtung offenen Zwischenraum hat sich gezeigt, dass hiermit bestimmte granulatförmige Verarbeitungsmaterialien, wie zum Beispiel wachsgefüllte Metallspritzgussgranulate, gut verarbeitbar sind, da durch die Seitenwände verhindert werden kann, dass Reste des Verarbeitungsmaterials mit Wänden des Trichters und/oder eines Zuführbereichs Brücken aus angelagertem Verarbeitungsmaterial bilden. Beispielsweise lässt sich bei wachsgefülltem Metallspritzgussgranulat als Verarbeitungsmaterial mit einem zumindest in einem mittleren Querschnitt L-förmigen Schieber, der sich gegenüberliegenden Seitenwänden ausbildet, verhindern, dass sich verknetete Wachsbrocken anlagern.

In einer Ausführungsvariante weist die Befülleinrichtung eine Steuerelektronik auf, mit der eine Frequenz, mit der über die Zuführeinrichtung Verarbeitungsmaterial in Richtung der Extruderschnecke (zurück) förderbar ist, eingestellt werden kann. Beispielsweise kann über eine derartige Steuerelektronik eine Frequenz einstellbar sein, mit der ein längsverschieblicher Schieber der Zuführeinrichtung längs vor und zurück verschoben wird, um bei einer Vorwärtsbewegung an dem Trichter zurückgeführtes Verarbeitungsmaterial wieder in Richtung der Extruderschnecke zu fördern.

Die vorgeschlagene Lösung umfasst ferner auch eine Extrudervorrichtung mit mindestens einer Extruderschnecke und mindestens einer vorgeschlagenen Befülleinrichtung sowie eine 3D-Druckvorrichtung, insbesondere einen 3D-Drucker, mit mindestens einer vorgeschlagenen Befülleinrichtung.

Ein weiterer Aspekt der vorgeschlagenen Lösung betrifft ein Verfahren zur Zuführung von Verarbeitungsmaterial an eine Extruderschnecke, insbesondere zur Zuführung von granulatförmigem Verarbeitungsmaterial an eine Extruderschnecke.

Hierbei ist vorgesehen, dass
- aus einem Materialreservoir stammendes Verarbeitungsmaterial unter Wirkung der Schwerkraft einem Trichter zugeführt wird, über den das Verarbeitungsmaterial entlang einer Zuführrichtung zu der Extruderschnecke gelangt, und
- unter Wirkung der sich drehenden Extruderschnecke entgegengesetzt zu der Zuführrichtung verdrängtes Verarbeitungsmaterial mithilfe einer Zuführeinrichtung zusammen mit Verarbeitungsmaterial aus dem Materialreservoir wieder zu der Extruderschnecke gefördert wird.

Wird unter Wirkung der sich drehenden Extruderschnecke beispielsweise zerkleinertes und zumindest teilweise pulverförmiges Verarbeitungsmaterial entgegengesetzt zu der Zuführrichtung aus dem Trichter heraus gedrängt, wird dieses aus dem Trichter stammende Verarbeitungsmaterial zusammen mit neu aus dem Materialreservoir kommenden Verarbeitungsmaterial vermengt und aktiv über die beispielsweise mechanisch, elektrisch, pneumatisch und/oder magnetisch wirkende Zuführeinrichtung zu der Extruderschnecke gefördert.

Ein vorgeschlagenes Verfahren ist hierbei insbesondere unter Verwendung der erfindungsgemäßen Befülleinrichtung umsetzbar. Vorstehend und nachstehend erläuterte Vorteile und Merkmale der erfindungsgemäßen Befülleinrichtung gelten somit auch für das erfindungsgemäße Verfahren und umgekehrt. Die beigefügten Figuren veranschaulichen exemplarisch Ausführungsvarianten der vorgeschlagenen Lösung.

Hierbei zeigen:
- Figur 1: ein erstes Ausführungsbeispiel für eine vorgeschlagene Befülleinrichtung in geschnittener Ansicht;
- Figur 2: eine Detaildarstellung der Figur 1 in vergrößertem Maßstab;
- Figur 3: eine weitere Ausführungsvariante einer vorgeschlagenen Befülleinrichtung;
- Figur 4: eine weitere Ausführungsvariante einer vorgeschlagenen Befülleinrichtung;
- Figur 5: eine weitere Ausführungsvariante einer vorgeschlagenen Befülleinrichtung;
- Figur 6: eine weitere Ausführungsvariante einer vorgeschlagenen Befülleinrichtung;
- Figur 7: eine weitere Ausführungsvariante einer vorgeschlagenen Befülleinrichtung;
- Figur 8: eine weitere Ausführungsvariante einer vorgeschlagenen Befülleinrichtung;
- Figur 9: in Schnittdarstellung eine vorgeschlagene Extrudervorrichtung mit einem Zerkleinerungswerkzeug;
- Figur 10: eine Draufsicht auf die Extrudervorrichtung der Figur 9;
- Figur 11: eine Detailansicht der Figur 9;
- Figur 12: eine weitere Detailansicht der Figur 9;
- Figur 13: eine weitere Detailansicht der Figur 9 mit einem granulatförmigen Verarbeitungsmaterial;
- Figur 14: in Draufsicht eine weitere Ausführungsvariante einer Extrudervorrichtung mit einem alternativ ausgestalteten Zerkleinerungswerkzeug;
- Figur 15: in Querschnittsansicht ein weiteres Ausführungsbeispiel einer Extrudervorrichtung mit einem alternativ ausgestalteten Zerkleinerungswerkzeug mit einer Spiralschnecke;
- Figuren 16A-19B: in verschiedenen Ansichten vier unterschiedliche Varianten für einen längsverschieblichen Schieber für eine Zuführeinrichtung der Figuren 1, 2 und 9 bis 15;
- Figuren 20A-20B: ausschnittsweise und in Querschnittsansicht eine Variante einer Zuführeinrichtung mit einer Variante zumindest in einem Querschnitt L-förmigen Schiebers entsprechend den Figuren 17A-17B und 19A- 19B in einem eingefahrenen Zustand (Figur 20A) und einem längsverschobenen, ausgefahrenen Zustand (Figur 20B).

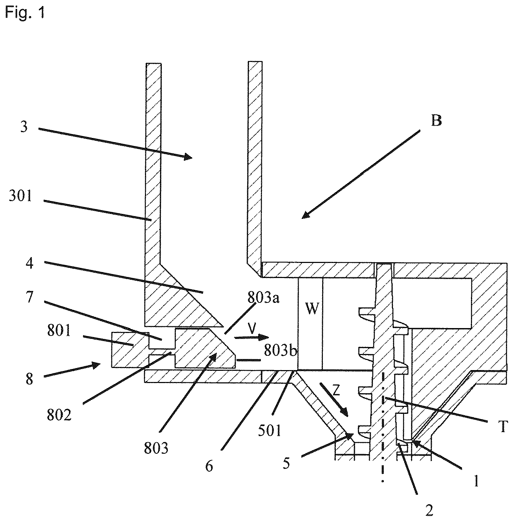

In der Figur 1 wird eine Ausführungsvariante einer vorgeschlagenen Extrudervorrichtung in Form eines vertikalen Extruders 1 gezeigt. Dabei ist der vertikale Extruder 1 mit einer Extruderschnecke 2 nur in seinem oberen Bereich zu sehen. Der Extruder 1 ist mit einer Befülleinrichtung B mit einem Materialreservoir in Form eines Bunkers 3 verbunden. Der Bunker 3 ist an seinem, der Extruderschnecke 2 zugewandtem Ende mit einer Zuführrampe 4 versehen, welche dem störungsfreien Nachrieseln von granulatförmigem Verarbeitungsmaterial dient. Die Zuführrampe 4 ist eine kompakte Einheit, welche im oberen Bereich mit einer Bunkerwand 301 verbunden ist.

Ein (Einfüll-) Trichter 5 liegt direkt an der Extruderschnecke 2 an, wobei das granulatförmige Verarbeitungsmaterial unter der Wirkung der Schwerkraft von der Zuführrampe 4 in den Trichter 5 befördert wird. Zwischen der Zuführrampe 4 und dem Trichter 5 befindet sich eine Öffnung 80 in der Bunkerwand 301, wobei die Zuführrampe 4 eine obere Begrenzung für die Öffnung 80 darstellt. Ein oberer Rand 501 des Trichters 5 geht in einen waagerecht verlaufenden Zuführbereich 6 über, welcher sich in seiner Länge bis zur äußeren Bunkerwand 301 erstreckt. Dieser waagerecht verlaufende Zuführbereich 6 ist die untere Begrenzung für die Öffnung 80.

Die Öffnung 80 dient der Aufnahme einer Zuführeinrichtung 8 und ist entsprechend der Größe der Zuführeinrichtung 8 dimensioniert. Die Zuführeinrichtung 8 weist einen pneumatisch, hydraulisch, mechanisch oder elektrisch angetriebenen Hubzylinder 801, eine Verbindungsstange 802 und einen Schieber 803 auf. Der Schieber 803 wird über den waagerecht verlaufenden Zuführbereich 6 entlang einer Verstellrichtung V in Richtung eines Einfüllbereichs des Extruders 1 geführt. An seiner, dem Extruderinneren zugewandten Seite besitzt der Schieber 803 eine geneigte Fläche 803a, welche dem Winkel der Zuführrampe 4 folgt. Diese Fläche 803a geht in eine Rammfläche 803b über, welche senkrecht und parallel zu der Bunkerwand 301 verläuft. Die Rammfläche 803b ist mindestens so groß, dass sie der Größe des zu verarbeitenden Granulats entspricht.

Bei Schneckenextrudern kleiner Baugröße kann sich das nachrieselnde Granulat im Zusammenhang mit dem zurück auf die Zuführrampe 4 gedrückten Granulat verdichten und bildet so eine Wand W aus Pulver, welche die Zufuhr neuen Granulats zur Extruderschnecke 2 verhindert. Durch die Zuführeinrichtung 8 wird verhindert, dass das Granulat bei Vorschub des Schiebers 803 zurück auf die Zuführrampe 4 gedrückt wird.

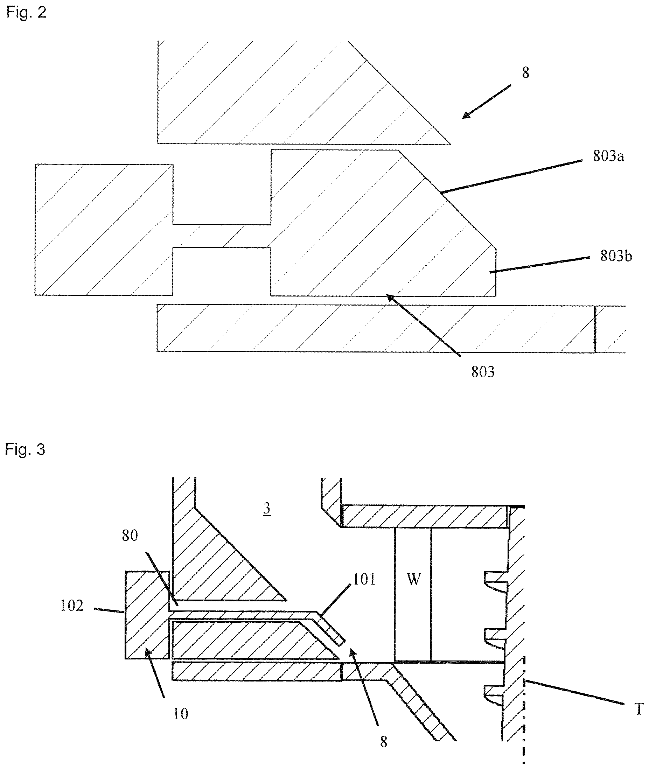

Der Hub des Hubzylinders 801 ist derart dimensioniert, dass Granulat im eingefahrenen Zustand senkrecht aus dem Bunker 3 fallen kann. Die Hublänge des Zylinders 801 entspricht, bezogen auf den eingefahrenen Zustand des Hubzylinders 801, der Entfernung zwischen dem oberen Rand 501 des Trichters 5 und der senkrechten Rammfläche 803b Schiebers 8 (Figur 2). Die Zuführeinrichtung 8 durchstößt im Weg befindliche Blockaden der Wand W und nachrieselndes Granulat wird aktiv in den Trichter 5 befördert.

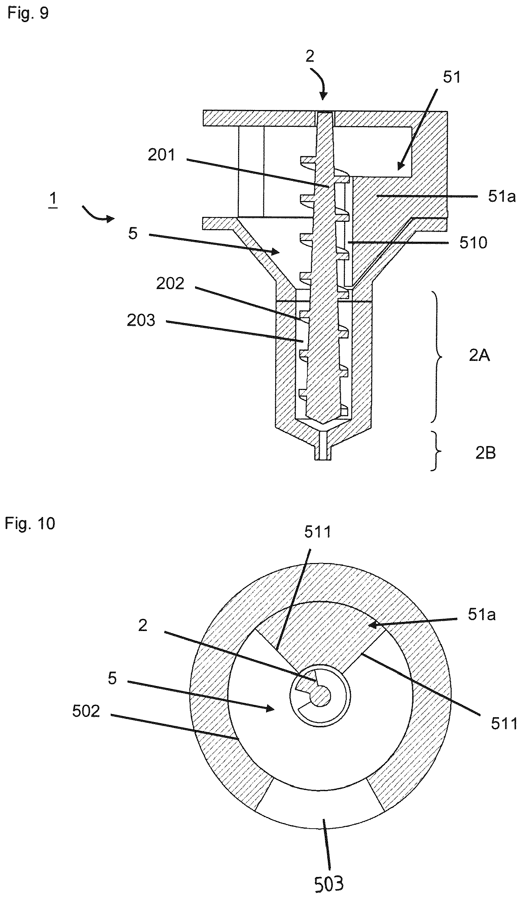

Die Zuführeinrichtung 8 fördert somit im Betrieb des Extruders 1 die unter Wirkung der Extruderschnecke 2 entgegen einer Zuführrichtung Z an dem Trichter 5 zurückgeführtes Verarbeitungsmaterial wieder zusammen mit aus dem Bunker 3 nachrieselnden Verarbeitungsmaterial in Richtung der Extruderschnecke 2. Hierbei wird an dem Trichter 5 unter Wirkung der sich drehenden Extruderschnecke 2 zurückgeführtes Verarbeitungsmaterials mit aus dem Bunker 3 zusätzlich zugeführtem Verarbeitungsmaterial vermengt. Über die Zuführeinrichtung 8 kann hierbei bereits über ein Zerkleinerungswerkzeug 51 innerhalb des Trichters 5 (vergleiche die Figuren 9 bis 15) zerkleinertes Verarbeitungsmaterial, das unter Wirkung der Extruderschnecke 2 entgegen der Zuführrichtung Z (in Gegenrichtung -Z) an dem Trichter 5 zurückgeführt wird, zusammen mit aus dem Bunker 3 zugeführten, unzerkleinerten granulatförmigen Verarbeitungsmaterial zu der Extruderschnecke 2 gefördert werden. Derart ist eine geringere Verdichtung des Verarbeitungsmaterials über die Extruderschnecke 2 notwendig und die Extruderschnecke 2 kann kürzer ausgeführt werden.

Ein weiteres Ausführungsbeispiel zeigt die Figur 3 in einer Detaildarstellung. Alle gleichen Anlagenteile in Figur 3 werden mit den gleichen Bezugszeichen wie in den Figuren 1 und 2 benannt. Der Bunker 3 ist auch hier an seinem, der Extruderschnecke 2 zugewandtem Ende mit einer Zuführrampe 4 versehen. Im unteren Bereich der Zuführrampe 4 ist erneut die Öffnung 80 vorgesehen, in welcher als ein rotierendes Element ein Rührhaken 10 als Teil einer Zuführeinrichtung 8 gelagert ist. Der Rührhaken 10 hat außerhalb der Bunkerwand 301 einen elektrischen Antrieb 102 und innerhalb des Bunkers 3 einen Haken 101, welcher in seiner Krümmung der Neigung der Zuführrampe 4 folgt. Die Länge des Rührhakens 10 ist so bemessen, dass der Haken 101 bis in die für die Bildung einer Wand W aus zurückgeführtem Verarbeitungsmaterial kritische Zone hineinragt und diese frei räumt und damit ebenfalls für eine Vermengung aus dem Trichter 5 zurückgeführten Verarbeitungsmaterials mit aus dem Bunker 3 nachrieselnden Verarbeitungsmaterials sorgt.

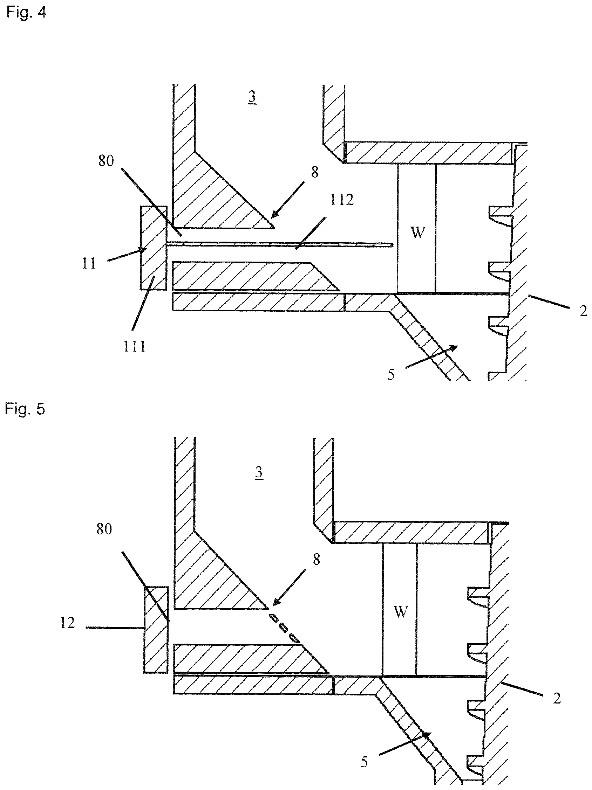

Die Figur 4 zeigt ein weiteres Ausführungsbeispiel mit einem Bunker 3 mit Zuführrampe 4 und einer Öffnung 80, in der ein Vibrationselement 11 als Teil einer Zuführeinrichtung 8 eingebracht ist. Durch eine Anregungseinheit 111, wie z.B. einen Vibrationsmotor, wird ein damit verbundenes Federelement 112 in Schwingungen versetzt. Das Federelement 112 wird durch eine Öffnung 80 in der Zuführrampe 4 des Bunkers 3 mittig in den Schacht eingeführt, ggf. auch erst bei Bedarf (sodass das Federelement 112 z.B., beispielsweise elektromotorisch gesteuert, zu definierenden Zeitpunkten während des Extrusionsprozesses an der Öffnung 80 ausgefahren wird). Die Länge des Federelements 112 ist so gewählt, dass es bis in den für die Bildung einer Wand W kritische Zone hineinragt. Auf diese Weise kann das Federelement 112 mittig in der Schüttung liegen und durch angeregte Vibrationen eine entstandene oder im Entstehen begriffene Wand W lockern und aufbrechen. Des Weiteren lässt sich derart, mithilfe des vibrierenden Federelements 112 aus der Trichter 5 zurückgeführtes Verarbeitungsmaterial mit dem aus dem Bunker 3 zugeführten Verarbeitungsmaterial vermengen.

Das Ausführungsbeispiel der Figur 5 sieht als Teil einer Zuführeinrichtung 8 eine Druckluftdüse 12 vor, über die ein Luftstrom in Richtung des Trichters 5 erzeugbar ist. Der Luftstrom wird hierbei durch eine mit einem Gitter abgedeckte schachtförmige Öffnung 80 in einer seitlichen Wandung der Zuführrampe 4 durch die Zuführrampe 4 geführt. Das Gitter ist dabei so ausgelegt, dass die Maschenweite oder Porengröße kleiner als die Größe des zu verarbeitenden Granulats ist. Durch einen permanenten Luftstrom wird verhindert, dass fein gemahlenes Pulver eindringen kann. Durch zusätzliche kurze kräftige Luftimpulse ist eine Kraft auf eine entstandene oder im Entstehen begriffene Wand W an zurückgeführtem Verarbeitungsmaterial aufbringbar, die hierdurch aufgebracht wird. Gleichzeitig wird über den Luftstrom, insbesondere die zusätzlichen Luftpulse auch hier die bereits vorstehend angesprochene Vermengung erreicht.

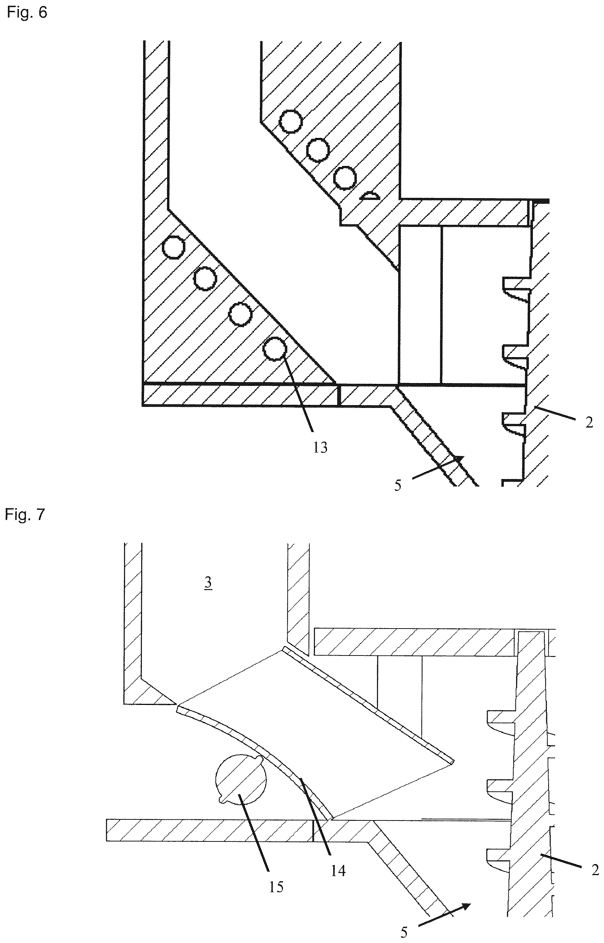

In Figur 6 ist ein weiteres Ausführungsbeispiel für eine Befülleinrichtung B dargestellt. Über den Einsatz einer elektromagnetischen Spule oder Magnetspule 13 in der Bunkerwand 301 und der Zuführrampe 4 wird ein elektrisches Feld erzeugt, das dem nachrieselnden Granulat zusätzlich zur Schwerkraft eine weitere Kraftkomponente in Richtung des Trichters 5 zufügt. Auf diese Weise wird eine ausreichend große Kraft auf eine entstandene oder im Entstehen begriffene Wand W ausgeübt, um diese einbrechen zu lassen. Diese Variante setzt eine Verarbeitung von magnetischem oder magnetisierbarem Verarbeitungsmaterial voraus, kann in diesem Zusammenhand aber ebenfalls insbesondere für die zuvor erläuterte Vermengung genutzt werden, sodass die Magnetspule 13 ebenfalls Teil einer Zuführeinrichtung 8 sein kann.

Die Figur 7 zeigt ein weiteres Ausführungsbeispiel. Hier ist die Ausführung eines Übergangsbereichs zwischen Bunker 3 und Trichter 5 als flexibles Rohr mit Zuführrampe 14 als Teil einer Zuführeinrichtung 8 vorgesehen, das von außen über ein rotierbares Antriebsteil 15 elastisch verformbar ist. Durch die abwechselnde Verjüngung und Weitung des Rohrquerschnitts kann nachrieselndes Granulat aktiv in den Bereich der Wand W gepresst und die angesprochene Vermengung unterstützt werden.

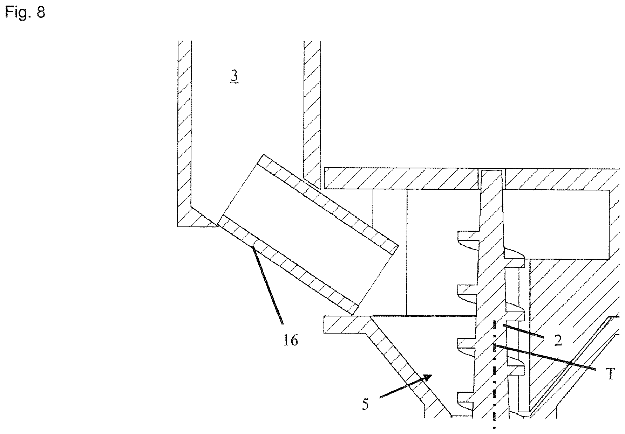

Die Ausführungsvariante der Figur 8 sieht ein von außen angetriebenes rotierendes Rohr 16 als Teil einer Zuführeinrichtung 8 vor. Hierbei wird durch die ständige, ggf. schwingende oder rüttelnde Bewegung des Rohres 16 ein Nachrieseln des Granulats aus dem Bunker 3 derart unterstützt, dass hierdurch die Bildung von Wänden W gehemmt wird und zusätzlich aus dem Trichter 5 unter Umständen durch die sich drehende Extruderschnecke 2 zurückgeführtes Verarbeitungsmaterial - zusammen mit aus dem Bunker 3 nachgeführtem Verarbeitungsmaterial - vermengt und erneut in Richtung des Trichters 5 gefördert wird.

In der Figur 9 wird eine vorgeschlagene Befülleinrichtung B in Kombination mit einem Zerkleinerungswerkzeug 51 in dem Trichter 5 gezeigt. Dabei ist erneut ein vertikaler Schneckenextruder 1 mit seiner Extruderschnecke 2 gezeigt. Der Schneckenextruder 1 ist mit der Befülleinrichtung B verbunden. Die Befülleinrichtung B ist an ihrem, der Extruderschnecke 2 zugewandten Ende mit einem Trichter 5 verbunden, welcher direkt an der Extruderschnecke 2 und koaxial zu dieser anliegt, wobei das als Granulat G vorliegende Verarbeitungsmaterial von der Befülleinrichtung B in den Einfülltrichter 5 befördert wird. Eine geringe Bauhöhe und eine Reduzierung des Längen-Durchmesserverhältnisses des Schneckenextruders 1 werden durch das Zerkleinerungswerkzeug 51 unterstützt. Das Zerkleinerungswerkzeug 51 ist radial im Einzugsbereich des Schneckenextruders 1, bevorzugt im Einfülltrichter 5, feststehend oder beweglich angeordnet, wie exemplarisch anhand von Ausführungsvarianten der Figuren 9 bis 15 näher veranschaulicht ist.

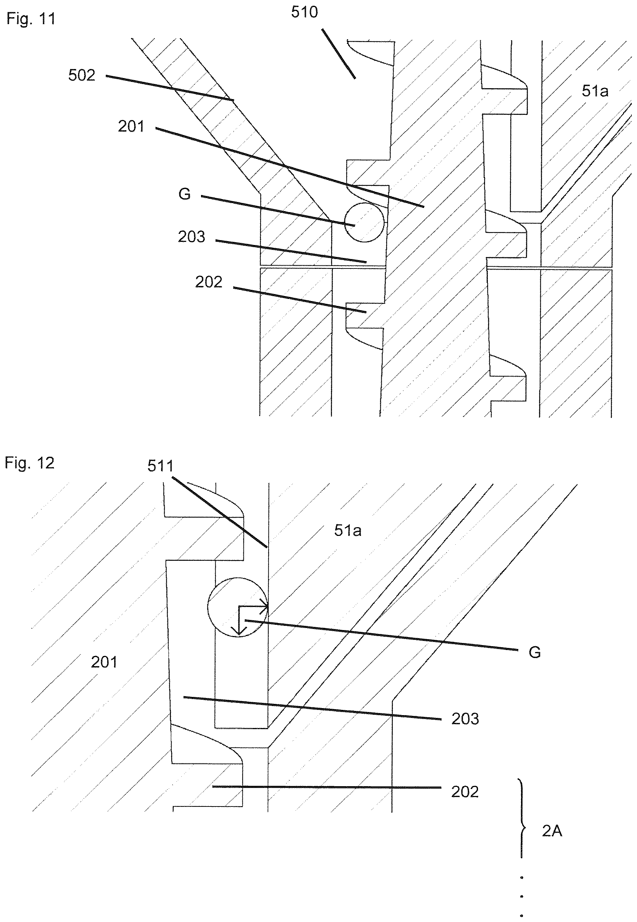

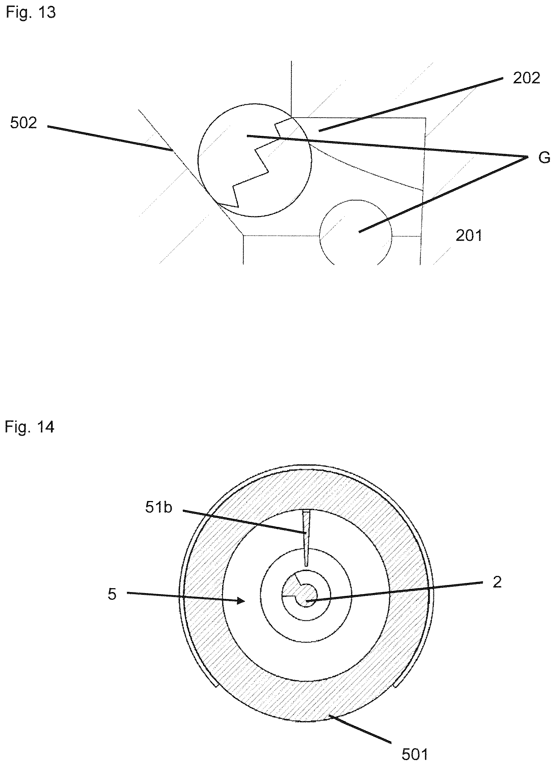

Die in Figuren 9 bis 13 gezeigte Ausführungsvariante umfasst als Zerkleinerungswerkzeug einen Teilkreisschnitt eines konusförmigen Reduzierungskörpers 51a, welcher der Befülleinrichtung B gegenüberliegend radial angeordnet ist und mit dem (Einfüll-) Trichter 5 lösbar verbunden ist. Durch den konusförmigen Reduzierungskörper 51a wird ein Einfüllbereich 502 im Einfülltrichter 5 an dieser Stelle soweit verringert, dass die Extruderschnecke 2 ein Außenradius-Kernradiusverhältnis aufweist, das nur dem 1- bis 1,5-fachen des Durchmessers des zu fördernden granulatförmigen Verarbeitungsmaterials entspricht (Fig.11). Das einfallende granulatförmige Material G fällt in den Einfülltrichter 5 und wird von der Extruderschnecke 2 weiter befördert. Durch die radiale Anordnung des konusförmigen Reduzierungskörpers 51a in dem Einfülltrichter 5 wird zum einen verhindert, dass sich das zugeführte Verarbeitungsmaterial am Rand der Extruderschnecke 2 nur in Umfangsrichtung, also nur mit der Drehung der Extruderschnecke 2, bewegt und nicht nach unten gefördert wird. Sobald am Rand der Extruderschnecke 2 befindliche Körner des granulatförmigen Verarbeitungsmaterials auf den konusförmigen Reduzierungskörper 5 treffen wird durch die Blockierung der Bewegung in Umfangsrichtung eine Bewegung in axialer Richtung hervorgerufen (Fig. 12). Durch den gleichzeitig sehr kleinen Zwischenraum zwischen Schneckenwelle 201 und Schneckenblatt 202 kann das Verarbeitungsmaterial nicht im Ganzen weiter gefördert werden und wird an einer Zerkleinerungskante 511 des konusförmigen Reduzierungskörpers 51a zertrümmert (Fig. 13). Die Schneckenwelle 201 und der konusförmige Reduzierungskörper 51a sind hierbei aus einem geeigneten Material in Bezug auf das zu verarbeitende Verarbeitungsmaterial gefertigt. Die Härte der Schneckenwelle 201 und des konusförmigen Reduzierungskörpers 51a sollte beispielsweise größer oder gleich der Härte des zu verarbeitenden Verarbeitungsmaterials sein.

Das Zertrümmern des Verarbeitungsmaterials hat eine Anhäufung von feinem Staub im Einfülltrichter 5 zur Folge. Dieser nachrutschende Staub füllt den Raum, der sich aufgrund der Schüttdichte des groben Verarbeitungsmaterials im Schneckengang 203 ergibt. Auf diese Weise erfolgt bereits im Einzug, ohne thermische Einwirkung eine Verdichtung und Homogenisierung des zu fördernden Verarbeitungsmaterials. Da auch weniger Luft in dem Extruder 1 nach unten gefördert wird, kann das Verarbeitungsmaterial in einer nachfolgenden Kompressionszone 2A schneller aufgeschmolzen werden. Die Kompressionszone 2A und eine entlang einer Trichterlängsachse T nachfolgende Ausstoßzone 2B werden deutlich verkürzt, sodass der Extruder 1 deutlich kompakter wird und ein Längen-Durchmesserverhältnis von 1:10 bis 1:3 erreicht werden kann.

Figur 14 zeigt ein weiteres Ausführungsbeispiel. Alle gleichen Teile in Figur 14 sind mit den gleichen Bezugszeichen wie in den vorangehenden Figuren benannt.

Die in Figur 14 gezeigte Variante umfasst als Zerkleinerungswerkzeug 51 eine vertikal verlaufende Wandung 51b, welche ähnlich dem konusförmigen Reduzierungskörpers 51a der Befülleinrichtung B gegenüberliegend radial angeordnet ist. Die vertikal verlaufende Wandung 51b funktioniert hierbei in ähnlicher Weise wie der konusförmige Reduzierungskörper 51a und ermöglicht unter der Wirkung der sich drehenden Extruderschnecke 2 ein Zerkleinern von Granulaten G des in dem Trichter 5 befindlichen Verarbeitungsmaterials an einer durch die Wandung 51b ausgebildeten Zerkleinerungskante 511.

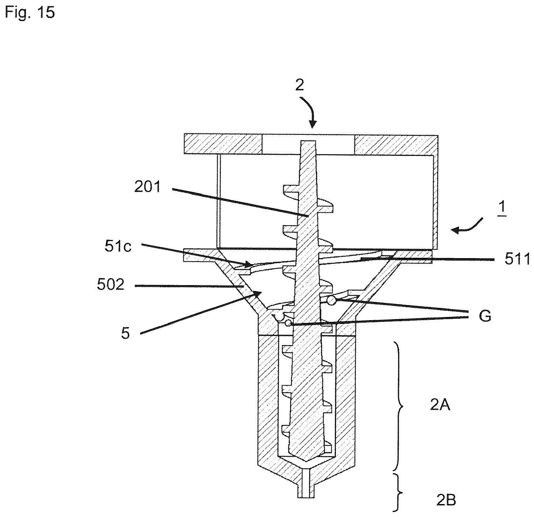

Die Figur 15 zeigt ein weiteres Ausführungsbeispiel, in welchem eine gegenläufige Spiralschnecke 51c als Teil des Zerkleinerungswerkzeugs 51 an der Innenwand 502 des Einfülltrichters 5 angeordnet ist. Durch die gegenläufige Drehung der Spiralschnecke 51c zur Schneckenwelle 201 wird das granulatförmige Verarbeitungsmaterial in die Extruderschnecke 2 transportiert, verdichtet und zerkleinert, wodurch eine weitere Verdichtung des Materials erfolgen kann.

Ein Zerkleinerungswerkzeug 51 kann grundsätzlich mindestens eine stillstehendes, mindestens eine Zerkleinerungskante 511 ausbildendes Element und/oder mindestens ein rotierendes, mindestens eine Zerkleinerungskante 511 ausbildendes Element aufweisen. Alternativ oder ergänzend können grundsätzlich an einer Innenwand 502 des Trichters 5 Rippen oder Klingen lösbar, beweglich und/oder unbeweglich angeordnet sein, die in gleicher Weise über mindestens eine Zerkleinerungskante 511 unter der Wirkung der sich drehenden Extruderschnecke 2 auf das granulatförmige Verarbeitungsmaterial einwirken, wie der konusförmige Reduzierungskörper 51a oder die vertikal verlaufende Wandung 51b.

Jedes Zerkleinerungswerkzeug 51 der Figuren 9 bis 15 kann vorliegend in einer Befülleinrichtung B mit einer Zuführeinrichtung 8 der vorstehend erläuterten Ausführungsvarianten kombiniert sein, sodass mithilfe des jeweiligen Zerkleinerungswerkzeugs 51 zerkleinertes Verarbeitungsmaterial, das unter Wirkung der Extruderschnecke 2 entgegen der Zuführrichtung Z an dem Trichter 5 zurückgeführt wird, mithilfe der Zuführeinrichtung 8 zusammen mit aus dem Bunker 3 zugeführten, unzerkleinerten granulatförmigen Verarbeitungsmaterial gezielt vermengt und zu der Extruderschnecke 2 gefördert werden kann.

Die vorgeschlagene Extrudervorrichtung in Form des Extruders 1 funktioniert über einen großen Drehzahlbereich der Extruderschnecke 2. Dadurch kann Sie auch bei Verarbeitungsmaterialien, die eine langsame Schneckendrehzahl erfordern, eingesetzt werden. Ebenfalls vom Verarbeitungsmaterial abhängig ist die Temperatur im Einzugsbereich der Extruderschnecke 2. Spröde Verarbeitungsmaterialien, wie Kompositmaterialien, benötigen eine Zerkleinerung in einem festen Zustand. Zähe Verarbeitungsmaterialien, wie reine thermoplastische Kunststoffe, benötigen eine Temperatur im Bereich Ihrer jeweiligen Glasübergangstemperatur. Unabhängig von dem eingesetzten Verarbeitungsmaterial kann über die Zuführeinrichtung 8 unter Wirkung der Extruderschnecke 2 entgegen der Zuführrichtung Z an dem Trichter 5 zurückgeführtes, bereits zerkleinertes und damit z.B. pulverförmiges Verarbeitungsmaterial wieder zusammen mit dem Bunker 3 zugeführtem, granularen Verarbeitungsmaterial in Richtung der Extruderschnecke 2 gefördert werden. Dies gestattet eine signifikante Verdichtung des der Extruderschnecke 2 zugeführten Verarbeitungsmaterials, wodurch wiederum eine kompaktere Ausgestaltung der Extruderschnecke 2 möglich ist, ohne Abstriche bei der Qualität des herzustellenden Bauteils machen zu müssen.

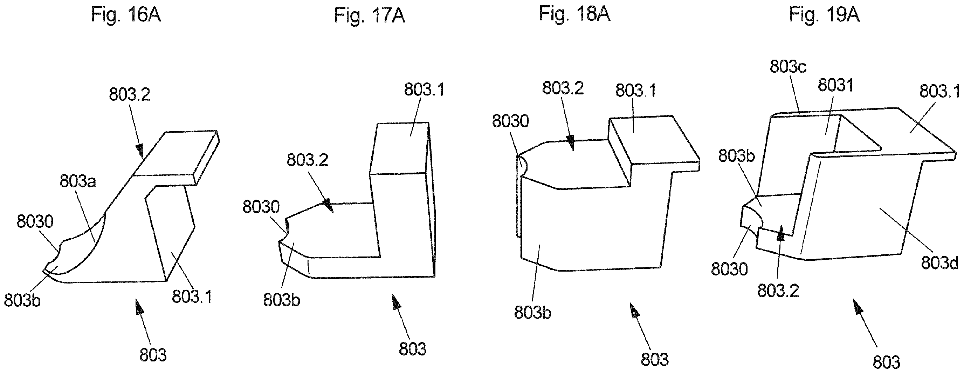

Die Figuren 16A-16B, 17A-17B, 18A-18B und 19A-19B zeigen in unterschiedlichen Ansichten vier verschiedene exemplarische Ausführungsvarianten für einen längsverschieblichen Schieber 803 für eine Zuführeinrichtung 8.

Die einzelnen Varianten der Figuren 16A bis 19B unterscheiden sich hierbei hinsichtlich ihrer Geometrie. Gemein ist jedoch jedem der Schieber 803 der Figuren 16A bis 19B eine wenigstens in einem mittleren Querschnitt L-förmige Querschnittsform sowie die Ausbildung mit einem Verbindungskörper 803.1, an dem eine Verstellkraft zur Verstellung des jeweiligen Schieber 803 entlang einer Längsachse aufgebracht wird, sowie die Ausbildung mit einem sich an den Verbindungskörper 803.1 anschließenden und (bei bestimmungsgemäßem Einbau des jeweiligen Schiebers 803 in die Zuführeinrichtung 8) in Richtung der Extruderschnecke 2 vorstehenden Rammabschnitt 803.2. An einer Stirnseite eines Rammabschnitts 803.2 ist jeweils eine Einbuchtung 8030 vorgesehen, die es gestattet, dass der jeweilige Schieber 803 maximal an die Extruderschnecke 2 herangerückt ist, wenn der jeweilige Schieber 803 in einem längsverschobenen, ausgefahrenen Zustand vorliegt. Lediglich ein schmaler Spalt bleibt in diesem ausgefahrenen Zustand nach oben hin frei, um die Drehung der Extruderschnecke 2 auch im ausgefahrenen Zustand des jeweiligen Schiebers 803 nicht zu beeinträchtigen. Die Einbuchtung 8030 kann hierbei ein Negativ des Durchmessers der Extruderschnecke 2 darstellen.

Die Breite jedes Schieber 803 der Figuren 16A bis 19B ist an die Breite eines im Bereich des oberen Randes 501 des Trichters 5 vorgesehenen Ausschnitts 503 für den Schieber 803 angepasst, sodass der Schieber 803 in seinem ausgefahrenen Zustand jeweils diesen zwischen einer Bunkeröffnung und der Extruderschnecke 2 vorliegenden Ausschnitt 503 komplett ausgefüllt. Derart ist verhindert das etwaiger Abrieb des Verarbeitungsmaterials hinter den Schieber 803 gelangen kann (vergleiche für die Lage des Ausschnitts 503 auch Figur 10).

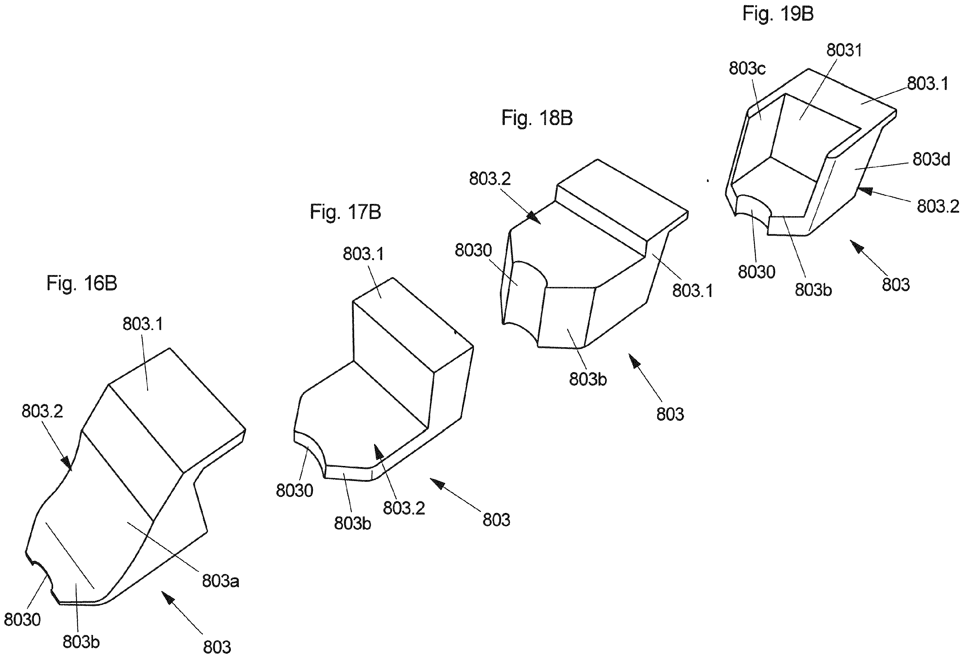

Bei der Ausführungsvariante der Figuren 16A und 16B weist der Schieber 803 an seinem Rammabschnitt 803.2 - insoweit in Einklang mit der Ausführungsvariante der Figuren 1 und 2 - eine geneigte Fläche 803a auf. Mithilfe dieser geneigten Fläche 803a wird zurückgeführtes Verarbeitungsmaterial in Richtung der Extruderschnecke 2 und dann über die stirnseitige, hier mit der Einbuchtung 8030 versehene Rammfläche 803b zurück in den Trichter 5 gefördert.

Bei der Ausführungsvariante der Figuren 17A und 17B ist der Schieber 803 L-förmig ausgebildet. In dieser Ausführungsvariante weist der Schieber 803 folglich einen sich im Wesentlichen senkrecht zu dem Verbindungskörper 803.1 erstreckenden, scheibenartigen Rammabschnitt 803.2 auf, der an seiner schmalen Stirnseite die Rampenfläche 803b ausbildet.

Bei der Ausführungsvariante der Figuren 18A und 18B ist demgegenüber der Rammabschnitt 803.2 höher gezogen und damit würfelförmig, gegebenenfalls kubisch ausgebildet. Die mit der Einbuchtung 8030 versehene stirnseitige Rammfläche 803b ist somit einerseits um ein Vielfaches größer als bei dem L-förmigen Schieber 803 der Figuren 17A und 17B. Ferner verläuft die Rammfläche 803b über einen Großteil der Gesamthöhe des Schiebers 803 und im Wesentlichen senkrecht zu der Verstellrichtung V, entlang der der Schieber 803 im bestimmungsgemäß eingebauten Zustand längs in Richtung der Extruderschnecke 2 und hiervon weg verschoben werden kann.

Bei der Ausführungsvariante der Figuren 19A und 19B ist der Schieber 803 zumindest in einem mittleren Bereich mit einem L-förmigen Querschnitt versehen. An den Längsseiten des Schiebers 803 der Figuren 19A und 19B sind jedoch im Unterschied zu der Ausführungsvariante der Figuren 17A und 17B einander gegenüberliegende und sich jeweils parallel und quer zur Verstellrichtung V erstreckende Seitenwände 803c und 803d ausgebildet. Über die einander gegenüberliegenden Seitenwände 803c und 803b ist an dem Schieber 803 der Figuren 19A und 19B ein taschenförmiger Zwischenraum 8031 gebildet. Dieser taschenförmige Zwischenraum 8031 ist zu der Extruderschnecke 2 und nach oben hin offen, wenn der Schieber 803 der Figuren 19A bis 19B bestimmungsgemäß an die Zuführeinrichtung 8 montiert ist. Der taschenförmige Zwischenraum 8031 ist folglich voneinander zugewandten Innenflächen der Seitenwände 803c und 803b, einer Rückwand des Verbindungskörpers 803.1 sowie einer Oberseite des Rammabschnitts 803.2 berandet. Ein stirnseitiger Bereich des Rammabschnitts 803.2 mit der Rammfläche 803b springt hierbei von den Seitenwänden 803c und 803d zumindest geringfügig vor.

Alle dargestellten Ausführungsvarianten eines Schiebers 803 entsprechend den Figuren 16A bis 19B haben sich für die Verarbeitung verschiedener Verarbeitungsmaterialien bewährt, zum Beispiel bei Metallspritzgussgranulate, fasergefüllten Granulaten oder gefüllten Granulaten. Mit Blick auf weiche Metallspritzgussgranulate, insbesondere wachsgefüllte Metallspritzgussgranulate, hat sich beispielsweise gezeigt, dass die Seitenwände 803c und 803d der Ausführungsvariante der Figuren 19A und 19B verhindern, dass sich verknetete Wachsbrocken an Wänden des Trichters 5 und des Zuführbereichs 6 anlagern können.

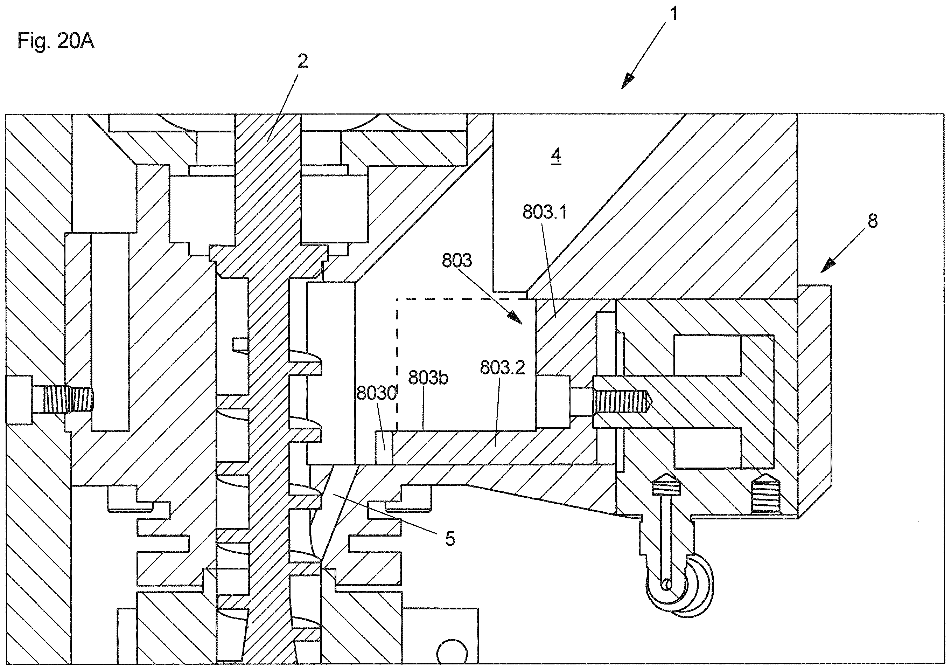

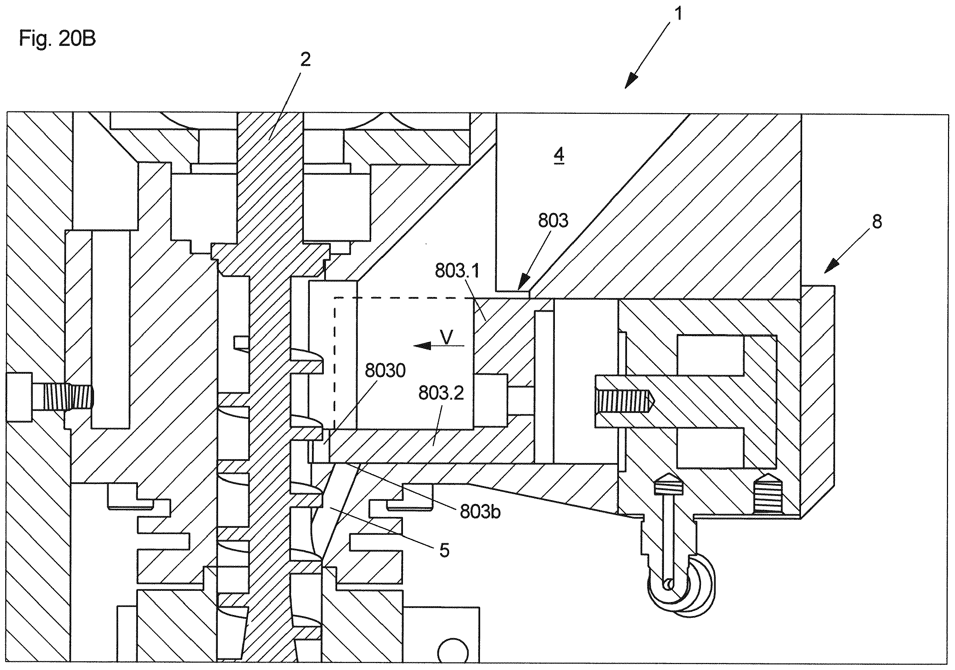

Die Figuren 20A und 20B zeigen in geschnittener Ansicht und ausschnittsweise die Verwendung eines Schiebers 803 der Figuren 17A-17B und (mit gestrichelt dargestellter Seitenwänden 803c) der Figuren 19A-19B in der Zuführeinrichtung 8. Während die Figur 20A hierbei den Schieber 803 in einem eingefahrenen Zustand zeigt, ist aus der Figur 20B der Schieber 803 in einem längsverschobenen, ausgefahrenen Zustand ersichtlich. Hierbei verdeutlicht die Figur 20B insbesondere die durch die Einbuchtung 8030 an der stirnseitigen Rammfläche 803b erreichbare maximale Einrückung des Schieber 803 bis zu der Extruderschnecke 2. So liegen Gewindeabschnitte der Extruderschnecke 2 zumindest mit einem randseitigen Bereich teilweise innerhalb der Einbuchtung 8030 drehbar vor, wenn der Schieber 803 entlang der Verstellrichtung V maximal ausgefahren ist, um zurückgeführtes Verarbeitungsmaterial wieder in den Trichter 5 zu fördern.

### Bezugszeichenliste

- 1: Extruder
- 10: Rührhaken
- 101: Haken
- 102: Handgriff
- 11: Vibrationsvorrichtung
- 111: Anregungseinheit
- 112: Stößel
- 12: Druckluftdüse
- 13: Magnetspule
- 14: Flexibles Rohr mit Zuführrampe
- 15: Antriebsteil
- 16: rotierendes Rohr
- 2: Extruderschnecke
- 201: Schneckenwelle
- 202: Schneckenblatt
- 203: Schneckengang
- 2A: Kompressionszone
- 2B: Ausstoßzone
- 3: Bunker (Materialreservoir)
- 301: Bunkerwand
- 4: Zuführrampe
- 5: Trichter
- 501: oberer Rand des Trichters
- 502: Innenwand
- 503: Ausschnitts
- 51: Zerkleinerungswerkzeug
- 510: Einfüllbereich
- 511: Zerkleinerungskante
- 51a: (konusförmiger) Reduzierkörper
- 51b: Vertikale verlaufen Wand
- 51c: Spiralförmig verlaufene Wand / Spiralschnecke
- 6: waagerecht verlaufender Zuführbereich
- 7: Öffnung
- 8: Zuführeinrichtung
- 80: Öffnung
- 801: Hubzylinder
- 802: Verbindungsstange
- 803: Schieber
- 803.1: Verbindungskörper (mit Rückwand oder geneigter Fläche)
- 803.2: Rammabschnitt
- 8030: Einbuchtung
- 8031: Zwischenraum
- 803a: geneigte Fläche
- 803b: Rammfläche
- 803c, 803d: Seitenwand
- B: Befülleinrichtung
- G: Granulat
- T: Trichterachse
- V: Verstellrichtung
- W: Wand

## Patentansprüche

1. Befülleinrichtung für die Zuführung von Verarbeitungsmaterial an mindestens eine Extruderschnecke (2), wobei die Befülleinrichtung (B) für die Zuführung von granulatförmigem Verarbeitungsmaterial an eine vertikal erstreckte Extruderschnecke (2) eingerichtet und vorgesehen ist und die Befülleinrichtung (B) umfasst:
- einen Trichter (5), der eingerichtet ist, das Verarbeitungsmaterial entlang einer Zuführrichtung (Z) an die Extruderschnecke (2) zu leiten, und
- ein Materialreservoir (3) für die schwerkraftgetriebene Zuführung des Verarbeitungsmaterials zu dem Trichter (5),
wobei der Trichter (5) ein Zerkleinerungswerkzeug (51) aufweist, über das zumindest ein Teil des in den Trichter (5) gelangenden granulatförmigen Verarbeitungsmaterials bei sich drehender Extruderschnecke (2) zerkleinert wird und das innerhalb eines Einfüllbereichs (510) des Trichters (5) mindestens eine Zerkleinerungskante (511) für die Zerkleinerung des granulatförmigen Verarbeitungsmaterials unter Wirkung der sich drehenden Extruderschnecke (2) ausbildet,
**dadurch gekennzeichnet, dass**
die Befülleinrichtung (B) eine Zuführeinrichtung (8) aufweist, über die unter Wirkung der Extruderschnecke (2) entgegen der Zuführrichtung (Z) an dem Trichter (5) zerkleinertes Verarbeitungsmaterial, das unter Wirkung der Extruderschnecke (2) entgegen der Zuführrichtung (Z) an dem Trichter (5) zurückgeführt wird, wieder zusammen mit aus dem Materialreservoir (3) zugeführtem unzerkleinertem granulatförmigem Verarbeitungsmaterial zu der Extruderschnecke (2) förderbar ist.

2. Befülleinrichtung nach Anspruch 1, **dadurch gekennzeichnet, dass** die Zuführeinrichtung (8) für eine Vermengung an dem Trichter (5) unter Wirkung der sich drehenden Extruderschnecke (2) zurückgeführten Verarbeitungsmaterials mit aus dem Materialreservoir (3) zusätzlich zugeführtem Verarbeitungsmaterial eingerichtet und vorgesehen ist.

3. Befülleinrichtung nach Anspruch 1 oder 2, **dadurch gekennzeichnet, dass** die mindestens eine Zerkleinerungskante (511) an einem konusförmigen Reduzierkörper (51a) des Zerkleinerungswerkzeugs (51), einer sich entlang der Trichterlängsachse (T) erstreckenden Wandung (51b) des Zerkleinerungswerkzeugs (51) oder einer sich zumindest abschnittsweise spiralförmig um die Trichterlängsachse (T) erstreckenden Wandung (51c) des Zerkleinerungswerkzeugs (51) vorgesehen ist.

4. Befülleinrichtung nach einem der vorhergehenden Ansprüche, **dadurch gekennzeichnet, dass** die Zuführeinrichtung (8) zur Förderung des Verarbeitungsmaterials in Richtung der Extruderschnecke (2) einen längsverschieblichen Schieber (803) aufweist.

5. Befülleinrichtung nach Anspruch 4, **dadurch gekennzeichnet, dass** der Schieber (803) einen L-förmigen Querschnitt aufweist.

6. Befülleinrichtung nach Anspruch 4 oder 5, **dadurch gekennzeichnet, dass** der Schieber (803) einen Rammabschnitt (803.2) zur Förderung des Verarbeitungsmaterials in Richtung der Extruderschnecke (2) aufweist, der an einer der Extruderschnecke (2) zugewandten Stirnseite eine Einbuchtung (8030) aufweist.

7. Befülleinrichtung nach Anspruch 6, **dadurch gekennzeichnet, dass** die Einbuchtung (8030) derart bemessen, dass bei maximal in Richtung der Extruderschnecke (2) längsverschobenem Schieber (803) zumindest ein Teil eines äußeren Randes der Extruderschnecke (2) innerhalb der Einbuchtung (8030) des Rammabschnitts (803.2) vorliegt.

8. Befülleinrichtung nach einem der Ansprühe 4 bis 7, **dadurch gekennzeichnet, dass** der Schieber (803) zwei sich jeweils quer zu einer Verstellrichtung (V), entlang der der Schieber (803) längsverschieblich ist, erstreckende und zwischen sich einen Zwischenraum (8031) definierende Seitenwände (803c, 803d) aufweist.

9. Befülleinrichtung nach einem der vorhergehenden Ansprüche, **dadurch gekennzeichnet, dass** die Zuführeinrichtung (8) zur Förderung des Verarbeitungsmaterials in Richtung der Extruderschnecke (2) mindestens eine Druckluftdüse (12) und/oder mindestens eine Magnetspule (13) aufweist.

10. Extrudervorrichtung, mit mindestens einer Extruderschnecke (2) und mindestens einer Befülleinrichtung (B) nach einem der Ansprüche 1 bis 9.

11. 3D-Druckvorrichtung mit mindestens einer Befülleinrichtung (B) nach einem der Ansprüche 1 bis 9.

12. Verfahren zur Zuführung von granulatförmigem Verarbeitungsmaterial an eine vertikal erstreckte Extruderschnecke (2), bei dem
- aus einem Materialreservoir (3) stammendes Verarbeitungsmaterial unter Wirkung der Schwerkraft einem Trichter (5) zugeführt wird, über den das Verarbeitungsmaterial entlang einer Zuführrichtung (Z) zu der Extruderschnecke (2) gelangt und der ein Zerkleinerungswerkzeug (51) aufweist, über das zumindest ein Teil des in den Trichter (5) gelangenden granulatförmigen Verarbeitungsmaterials bei sich drehender Extruderschnecke (2) zerkleinert wird und das innerhalb eines Einfüllbereichs (510) des Trichters (5) mindestens eine Zerkleinerungskante (511) für die Zerkleinerung des granulatförmigen Verarbeitungsmaterials unter Wirkung der sich drehenden Extruderschnecke (2) ausbildet, und
- unter Wirkung der sich drehenden Extruderschnecke (2) entgegengesetzt zu der Zuführrichtung (Z) verdrängtes, zerkleinertes Verarbeitungsmaterial, das unter Wirkung der Extruderschnecke (2) entgegen der Zuführrichtung (Z) an dem Trichter (5) zurückgeführt wird, mithilfe einer Zuführeinrichtung (8) zusammen mit unzerkleinertem granulatförmigem Verarbeitungsmaterial aus dem Materialreservoir (3) wieder zu der Extruderschnecke (2) gefördert wird.

## Claims

1. A charging system for feeding processing material to at least one extruder screw (2), wherein the charging system (B) is configured and provided for feeding granular processing material to a vertically extended extruder screw (2) and wherein the charging system (B) comprises
- a hopper that is configured to conduct the processing material along a feed direction (Z) to the extruder screw (2), and
- a material reservoir (3) for the gravity-driven feeding of the processing material to the hopper (5),
wherein the hopper (5) comprises a comminution tool (51) by which at least a part of the granular processing material entering the hopper (5) is comminuted as the extruder screw (2) rotates and which forms inside a filling zone (510) of the hopper (5) at least one comminution edge (511) for the comminution of the granular processing material by action of the rotating extruder screw (2),
**characterized in that**
the charging system (B) comprises a feeding device (8) via which processing material comminuted at the hopper (5) against the feed direction (Z) by action of the extruder screw (2), which is recirculated at the hopper (5) against the feed direction (Z) by action of the extruder screw (2), can again be conveyed to the extruder screw (2) together with non-comminuted granular processing material fed from the material reservoir (3).

2. The charging system according to claim 1, **characterized in that** the feeding device (8) is configured and provided for blending processing material recirculated at the hopper (5) by action of the rotating extruder screw (2) with processing material additionally fed from the material reservoir (3).

3. The charging system according to claim 1 or 2, **characterized in that** the at least one comminution edge (511) is provided on a cone-shaped reducing body (51a) of the comminution tool (51), on a wall (51b) of the comminution tool (51) extending along the longitudinal hopper axis (T) or on a wall (51c) of the comminution tool (51) at least sectionally extending spirally around the longitudinal hopper axis (T).

4. The charging system according to any of the preceding claims, **characterized in that** for conveying the processing material in the direction of the extruder screw (2) the feeding device (8) comprises a longitudinally shiftable slide (803).

5. The charging system according to claim 4, **characterized in that** the slide (803) has an L-shaped cross-section.

6. The charging system according to claim 4 or 5, **characterized in that** the slide (803) has a ramming portion (803.2) for conveying the processing material in the direction of the extruder screw (2), which has an indentation (8030) on a front side facing the extruder screw (2).

7. The charging system according to claim 6, **characterized in that** the indentation (8030) is dimensioned such that when the slide (803) is maximally longitudinally shifted towards the extruder screw (2), at least part of an outer edge of the extruder screw (2) is present within the indentation (8030) of the ramming portion 803.2.

8. The charging system according to any of claims 4 to 7, **characterized in that** the slide (803) has two side walls (803c, 803d) each extending transversely to an adjustment direction (V), along which the slide (803) is longitudinally shiftable, and defining a space (8031) between themselves.

9. The charging system according to any of the preceding claims, **characterized in that** for conveying the processing material in the direction of the extruder screw (2) the feeding device (8) comprises at least one compressed-air nozzle (12) and/or at least one solenoid coil (13).

10. An extruder device, comprising at least one extruder screw (2) and at least one charging system (B) according to any of claims 1 to 9.

11. A 3D printing device comprising at least one charging system (B) according to any of claims 1 to 9.

12. A method for feeding granular processing material to a vertically extended extruder screw (2), in which
- processing material originating from a material reservoir (3) is fed to a hopper (5) by action of gravity, via which hopper the processing material is moved to the extruder screw (2) along a feed direction (Z) and which comprises a comminution tool (51) by which at least a part of the granular processing material entering the hopper (5) is comminuted as the extruder screw (2) rotates and which forms inside a filling zone (510) of the hopper (5) at least one comminution edge (511) for the comminution of the granular processing material by action of the rotating extruder screw (2), and
- comminuted processing material displaced in a direction opposite to the feed direction (Z) by action of the rotating extruder screw (2), which is recirculated at the hopper (5) against the feed direction (Z) by action of the extruder screw (2), is again conveyed to the extruder screw (2) together with non-comminuted granular processing material from the material reservoir (3) by means of a feeding device (8).

## Revendications

1. Système de remplissage pour l'amenée de matériau à traiter à au moins une vis sans fin d'extrudeuse (2), dans lequel le système de remplissage (B) est mis au point et est prévu pour amener du matériau à traiter sous forme de granulés à une vis sans fin d'extrudeuse (2) s'étendant verticalement et le système de remplissage (B) comprend :
- un entonnoir (5), qui est mis au point pour acheminer le matériau à traiter à la vis sans fin d'extrudeuse (2) le long d'une direction d'amenée (Z), et
- un réservoir de matériau (3) pour l'amenée entraînée par gravité du matériau à traiter à l'entonnoir (5),
dans lequel
l'entonnoir (5) présente un outil de broyage (51), par l'intermédiaire duquel au moins une partie du matériau à traiter sous forme de granulés parvenant dans l'entonnoir (5) est broyée lorsque la vis sans fin d'extrudeuse (2) tourne et qui forme au moins une arête de broyage (511) pour le broyage du matériau à traiter sous forme de granulés sous l'action de la vis sans fin d'extrudeuse (2) qui tourne à l'intérieur d'une zone de remplissage (510) de l'entonnoir (5),
**caractérisé en ce que**
le système de remplissage (B) présente un système d'amenée (8), par l'intermédiaire duquel du matériau à traiter broyé, qui est retourné à l'entonnoir (5) sous l'action de la vis sans fin d'extrudeuse (2) dans le sens opposé à la direction d'amenée (Z), peut être transporté vers la vis sans fin d'extrudeuse (2) à nouveau conjointement avec le matériau à traiter sous forme de granulés non broyé amené depuis le réservoir de matériau (3) sous l'action de la vis sans fin d'extrudeuse (2) dans le sens opposé à la direction d'amenée (Z) sur l'entonnoir (5).

2. Système de remplissage selon la revendication 1, **caractérisé en ce que** le système d'amenée (8) est mis au point pour un mélangeage de matériau à traiter ramené sur l'entonnoir (5) sous l'action de la vis sans fin d'extrudeuse (2) qui tourne avec du matériau à traiter amené en supplément depuis le réservoir de matériau (3).

3. Système de remplissage selon la revendication 1 ou 2, **caractérisé en ce que** l'au moins une arête de broyage (511) est prévue sur un corps de réduction de forme conique (51a) de l'outil de broyage (51), une paroi (51b), s'étendant le long de l'axe longitudinal d'entonnoir (T), de l'outil de broyage (51) ou une paroi (51c), s'étendant au moins par endroits en forme de spirale autour de l'axe longitudinal d'entonnoir (T), de l'outil de broyage (51).

4. Système de remplissage selon l'une quelconque des revendications précédentes, **caractérisé en ce que** le système d'amenée (8) présente un coulisseau (803) pouvant être coulissé longitudinalement pour transporter le matériau à traiter en direction de la vis sans fin d'extrudeuse (2).

5. Système de remplissage selon la revendication 4, **caractérisé en ce que** le coulisseau (803) présente une section transversale en forme de L.

6. Système de remplissage selon la revendication 4 ou 5, **caractérisé en ce que** le coulisseau (803) présente une section de battage (803.2) destinée à transporter le matériau à traiter en direction de la vis sans fin d'extrudeuse (2), laquelle présente un creux concave (8030) sur un côté frontal tourné vers la vis sans fin d'extrudeuse (2).

7. Système de remplissage selon la revendication 6, **caractérisé en ce que** le creux concave (8030) est dimensionné de telle manière que, lorsque le coulisseau (803) est coulissé longitudinalement au maximum en direction de la vis sans fin d'extrudeuse (2), au moins une partie d'un bord extérieur de la vis sans fin d'extrudeuse (2) est présente à l'intérieur du creux concave (8030) de la section de battage (803.2).

8. Système de remplissage selon l'une quelconque des revendications 4 à 7, **caractérisé en ce que** le coulisseau (803) présente deux parois latérales (803c, 803d) s'étendant respectivement de manière transversale à une direction d'ajustement (V), le long de laquelle le coulisseau (803) est coulissé longitudinalement, et définissant entre elles un espace intermédiaire (8031).

9. Système de remplissage selon l'une quelconque des revendications précédentes, **caractérisé en ce que** le système d'amenée (8) présente au moins une buse à air comprimé (12) et/ou au moins une bobine magnétique (13) pour transporter le matériau à traiter en direction de la vis sans fin d'extrudeuse (2).

10. Dispositif d'extrudeuse avec au moins une vis sans fin d'extrudeuse (2) et au moins un système de remplissage (B) selon l'une quelconque des revendications 1 à 9.

11. Dispositif d'impression 3D avec au moins un système de remplissage (B) selon l'une quelconque des revendications 1 à 9.

12. Procédé d'amenée du matériau à traiter sous forme de granulés à une vis sans fin d'extrudeuse (2) s'étendant verticalement, où
- du matériau à traiter provenant d'un réservoir de matériau (3) est amené à un entonnoir (5) sous l'action de la gravité, par l'intermédiaire duquel le matériau à traiter parvient à la vis sans fin d'extrudeuse (2) le long d'une direction d'amenée (Z) et qui présente un outil de broyage (51), par l'intermédiaire duquel au moins une partie du matériau à traiter sous forme de granulés parvenant dans l'entonnoir (5) est broyée lorsque la vis sans fin d'extrudeuse (2) tourne et qui réalise, à l'intérieur d'une zone de remplissage (510) de l'entonnoir (5), au moins une arête de broyage (511) pour le broyage du matériau à traiter sous forme de granulés sous l'action de la vis sans fin d'extrudeuse (2) qui tourne, et
- du matériau à traiter broyé refoulé dans le sens opposé à la direction d'amenée (Z) sous l'action de la vis sans fin d'extrudeuse (2) qui tourne, qui est ramené à l'entonnoir (5) dans le sens opposé à la direction d'amenée (Z) sous l'action de la vis sans fin d'extrudeuse (2), est transporté à nouveau vers la vis sans fin d'extrudeuse (2) depuis le réservoir de matériau (3) conjointement avec du matériau à traiter sous forme de granulés non broyé.
